(19) **Europäisches Patentamt**

**European Patent Office**

**Office européen des brevets**

(11) **EP 0 558 934 B2**

(12) **NEUE EUROPÄISCHE PATENTSCHRIFT**

(45) Veröffentlichungstag und Bekanntmachung des Hinweises auf die Entscheidung über den Einspruch:
**06.12.2000 Patentblatt 2000/49**

(51) Int. Cl.⁷: **B66B 1/04**

(45) Hinweis auf die Patenterteilung:
**21.08.1996 Patentblatt 1996/34**

(21) Anmeldenummer: **93101500.2**

(22) Anmeldetag: **01.02.1993**

(54) **Verfahren und Vorrichtung zum Einsparen von elektrischer Energie für den Antrieb eines hydraulischen Aufzuges**

Method and arrangement to conserve electric power for driving a hydraulic elevator

Procédure et dispositif pour conserver de l'énergie électrique pour l'entraînement d'un ascenseur hydraulique

(84) Benannte Vertragsstaaten:
**AT BE CH DE DK ES FR GB IT LI NL SE**

(30) Priorität: **04.03.1992 CH 67092**

(43) Veröffentlichungstag der Anmeldung:
**08.09.1993 Patentblatt 1993/36**

(73) Patentinhaber: **INVENTIO AG**
**CH-6052 Hergiswil NW (CH)**

(72) Erfinder: **Nagel, Heinz-Dieter**
**W-1000 Berlin 48 (DE)**

(56) Entgegenhaltungen:
**DE-A- 1 184 055**     **DE-A- 2 658 928**
**DE-A- 3 836 212**     **DE-A- 4 034 666**
**DE-A- 4 036 860**     **DE-B- 1 184 055**
**DE-U- 2 992**     **NL-A- 8 701 922**

• **PATENT ABSTRACTS OF JAPAN vol. 10, no. 116 (P-452)(2173) 30. April 1986 & JP-A-60 246 412 ( MITSUBISHI DENKI K.K ) 6. Dezember 1985**

EP 0 558 934 B2

Printed by Xerox (UK) Business Services
2.16.7 (HRS)/3.6

**Beschreibung**

Die Erfindung betrifft ein Verfahren und eine Vorrichtung zum Einsparen von elektrischer Energie für den Antrieb eines hydraulischen Aufzuges, bei welchem ein Druckmittel unter Verwendung einer von einem Elektromotor angetriebenen Hydraulikpumpe aus einem Behälter durch eine Hauptleitung in einen Zylinder gepumpt wird, um den Aufzug aufwärts zu bewegen, und bei welchem das Druckmittel vom Zylinder über ein Steuer- oder Absenkventil in den Behälter zurückfliesst, um den Aufzug abwärts zu bewegen.

Zur Ermittlung der Anschlussleistung für den Antrieb eines hydraulischen Aufzuges geht man üblicherweise von einer gewählten maximalen Tragfähigkeit und einer bestimmten gewählten Fahrgeschwindigkeit für die Aufwärtsfahrt der Aufzugskabine aus. Mit der Gesamtmasse P, bestehend aus Kabinengewicht, Tragfähigkeit und eventuell vorhandenen Zusatzgewichten und der vorbestimmten, gewünschten Fahrgeschwindigkeit v in Aufwärtsrichtung, errechnet sich die Anschlussleistung N:

$$N = P \cdot v$$

Aus dieser Formel geht hervor, dass die Anschlussleistung eines Aggregates direkt abhängig ist von der bewegten Masse und von der Hubgeschwindigkeit.

Die volle Anschlussleistung wird nur dann ausgenutzt, wenn die Aufzugskabine für die volle Tragfähigkeit belastet ist. Bei kleineren Lasten arbeitet der Antrieb mit schlechterem Wirkungsgrad und somit bei verhältnismässig hohem Energieverbrauch.

Mit der DE-OS 40 34 666 ist ein hydraulischer Aufzug mit geringem Energieverbrauch bekanntgeworden, welcher über eine Inverter-Energiequelle angetrieben wird und einen Hauptzylinder mit einem Stempel und einer Aufzugskabine und einen Hilfs- oder Ausgleichszylinder mit einem festen Ausgleichsgewicht und einem wählbaren Ausgleichsgewicht aufweist. Die beiden Zylinder sind über eine Hydraulikpumpe miteinander verbunden. Das feste Ausgleichsgewicht entspricht normalerweise dem Eigengewicht der Aufzugskabine, während das wählbare Ausgleichsgewicht so vorgesehen wird, dass es ungefähr der Hälfte der Maximallast in der Aufzugskabine entspricht. Damit wird die Druckdifferenz zwischen dem Hauptaufzug und dem Ausgleichsaufzug bei allen Belastungen möglichst gering gehalten. Die Auslegung der Antriebsgrösse hängt somit vom Unterschied zwischen der Belastung des Ausgleichsaufzuges und des Hauptaufzuges ab. Die Leistung beträgt bei der <u>Aufwärtsfahrt, ohne Last</u>:

$$N = [(A + B + 0) - (C + B + {}^{W}\!/_{2})] \cdot v = \underline{(A - C - {}^{W}\!/_{2}) \cdot v}$$

$$(\text{wenn } C = A): \qquad N \qquad = \qquad \underline{- {}^{W}\!/_{2} \cdot v}$$

<u>mit Vollast</u>:

$$N = [(A + B + W) - (C + B + {}^{W}\!/_{2})] \cdot v = \underline{(A - C + {}^{W}\!/_{2} \cdot v}$$

$$(\text{wenn } C = A): \qquad N \qquad = \qquad \underline{+ {}^{W}\!/_{2} \cdot v}$$

(darin bedeuten: N = Antriebsleistung, A = Masse der Kabine, B = Masse eines Stempels, W = Masse der maximalen Kabinenbelastung, ${}^{W}\!/_{2}$ = Masse der halben Kabinenbelastung C = Masse des festen Ausgleichsgewichtes, [hier C = A ], v = Hubgeschwindigkeit).

Ein Nachteil dieses hydraulischen Aufzuges liegt darin, dass ein zusätzlicher Hilfszylinder mit einem festen und einem wählbaren Ausgleichsgewicht, der nötigen Verbindungsleitung, sowie eine relativ aufwendige Inverter-Energiequelle erforderlich sind.

Der Erfindung liegt die Aufgabe zugrunde, ein Verfahren und eine Vorrichtung zum Einsparen von elektrischer Energie für den Antrieb eines hydraulischen Aufzuges vorzuschlagen, welcher bei praktisch konstantem Energiebedarf und bei praktisch gleichbleibendem, gutem Wirkungsgrad arbeitet.

Diese Aufgabe wird durch die in den Ansprüchen 1 4 und 5 gekennzeichnete Erfindung gelöst.

Die durch die Erfindung erreichten Vorteile sind im wesentlichen darin zu sehen, dass der hydraulische Aufzug bei jeder Belastung mit stets gleicher, konstanter Leistung und gutem Wirkungsgrad angetrieben wird, wobei die Hub-Nenngeschwindigkeit bei der erfahrungsgemäss häufigsten Belastung der Aufzugskabine beispielsweise mit 2 Personen erreicht wird, und sich bei Leerlauf eine grössere und bei Vollast eine kleinere Hubgeschwindigkeit einstellt, und dass zur allfälligen Kompensation der Förderleistung, die Senkgeschwindigkeit über ein Ventilsystem, ebenfalls in Abhängigkeit der Belastung so geregelt wird, dass bei grösserer Belastung die Senkgeschwindigkeit vergrössert wird.

Für die Auslegung einer mittleren Anschlussleistung bzw. des dazu nötigen Antriebsaggregates, wird die gewählte Hub-Nenngeschwindigkeit und die Masse der dabei geförderten Anzahl Personen in Rechnung gestellt. Dabei ergibt sich ein Antriebsaggregat, welches kleiner ist als ein Aggregat für einen hydraulischen Aufzug mit gleichbleibender, gleicher Nenn-Hubgeschwindigkeit bei jeder Hublast.

In den Zeichnungen ist ein Ausführungsbeispiel der Erfindung dargestellt, das im folgenden näher erläutert wird.

Es zeigen:

Fig. 1     ein Hydraulikschema mit einer Verstellpumpe mit veränderlichem Verdrängungsvolumen in einer Stromrichtung, mit einem stufenlos regulierbaren Druckregelsystem;

Fig. 2     ein Hydraulikschema mit einer Verdrängerpumpe, mit konstantem Verdrängungsvolumen, mit frequenzgeregeltem Antriebsmotor, mit stufenloser Anpassung der Motordrehzahl, in Abhängigkeit der effektiv vorhandenen Belastung.

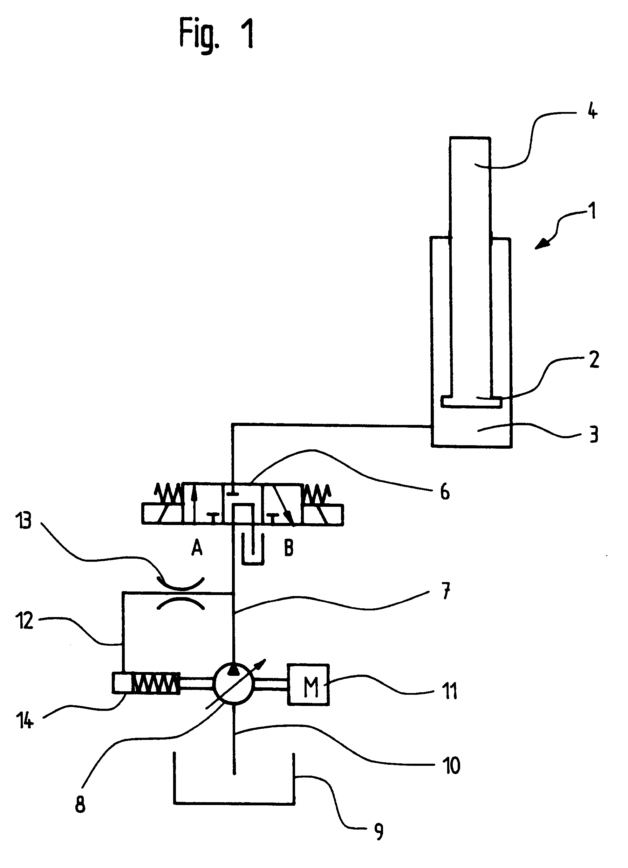

In Fig. 1 ist mit 1 eine Kolben-Zylindereinheit bezeichnet, welche einen Kolben 2, einen Zylinder 3 und eine Kolbenstange 4 aufweist. Der Zylinder 3 ist auf der Kolbenseite über eine Leitung 5 mit der Ausgangsseite eines Steuer- oder Absenkventils 6 verbunden. Das Steuerventil 6 weist eine Arbeitsstellung A für den Aufwärtsbetrieb und eine Arbeitsstellung B für den Abwärtsbetrieb auf. Die Eingangsseite des Steuerventils 6 und die Ausgangsseite einer Verstellpumpe 8 sind mit einer Hauptleitung 7, die Eingangsseite der Verstellpumpe 8 und einen Behälter 9 mit einer Eingangsleitung 10 verbunden. Die Verstellpumpe 8 wird von einem Elektromotor 11 angetrieben. An der Hauptleitung 7 schliesst eine Nebenleitung 12 an, die über eine Drosselung 13 und ein das Verdrängungsvolumen der Verstellpumpe 8 regulierendes Druckregelungsventil 14 mit der Verstellpumpe 8 verbunden ist.

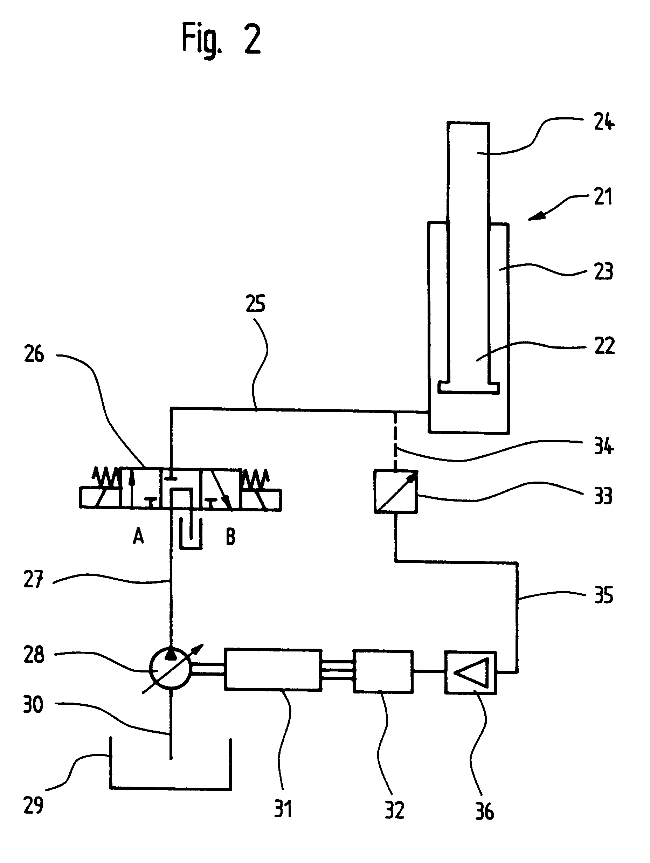

In Fig. 2 ist mit 21 eine Kolben-Zylindereinheit bezeichnet, welche einen Kolben 22, einen Zylinder 23 und eine Kolbenstange 24 aufweist. Der Zylinder 23 ist auf der Kolbenseite über eine Verbindungsleitung 25 mit der Ausgangsseite eines Steuerventils 26 verbunden. Das Steuerventil 26 weist eine Arbeitsstellung A für den Aufwärtsbetrieb und eine Arbeitsstellung B für den Abwärtsbetrieb auf. Die Eingangsseite des Steuerventils 26 und die Ausgangsseite einer Verdrängerpumpe 28 sind mit einer Hauptleitung 27, die Eingangsseite der Verdrängerpumpe 28 und einen Behälter 29 mit einer Eingangsleitung 30 verbunden. Die Verdrängerpumpe 28 wird von einem von einem Frequenzumformer 32, in Abhängigkeit der effektiv vorhandenen Belastung, stufenlos geregelten Elektromotor 31 angetrieben. An der den Zylinder 23 und das Steuerventil 26 miteinander verbindenen Verbindungsleitung 25 ist mit einer Anschlussleitung 34 ein Messwandler 33 angeschlossen. Der Messwandler 33 ist mit einer elektrischen Leitung 35 mit einem Verstärker 36 des Frequenzumformers 32 verbunden.

Bei einer Anordnung wie sie in Fig. 1 dargestellt ist, wird eine Aufzugskabine durch die Kolbenstange 4 aufwärts bewegt, indem von der durch den Elektromotor 11 angetriebenen Verstellpumpe 8, über die Hauptleitung 7, über das in die Arbeitsstellung A geführte Steuerventil 6 und über die Leitung 5, Öl in den Zylinder 3 der Kolben-Zylinder-Einheit 1 gepresst wird. Die Verstellpumpe 8 wird dabei durch das Druckregelungsventil 14 entsprechend des im Zylinder 3 der Kolben-Zylinder-Einheit 1 jeweils herrschenden Druckes so verstellt, dass, bei konstanter Antriebsleistung, das Verdrängungsvolumen der Verstellpumpe 8 diejenige Fahrgeschwindigkeit der Aufzugskabine in der Aufwärtsrichtung ergibt, welche der in der Aufzugskabine herrschenden Belastung entspricht. Bei zunehmender Belastung in der Aufzugskabine steigt der Druck im Zylinder 3 der Kolben-Zylinder-Einheit 1 und die Verstellpumpe 8 wird so verstellt, dass bei praktisch konstanter Antriebsleistung das Verdrängungsvolumen der Verstellpumpe und dabei die Fahrgeschwindigkeit der Aufzugskabine in der Aufwärtsrichtung abnimmt.

Bei einer Anordnung wie sie in Fig. 2 dargestellt ist, wird die Aufzugskabine wiederum durch die Kolbenstange 24 aufwärts bewegt, indem von der durch den Elektromotor 31 angetriebenen Verdrängerpumpe 28 über die Hauptleitung 27, über das in die Arbeitsstellung A geführte Steuerventil 26 und über die Leitung 25, Öl in den Zylinder 23 der Kolben-Zylinder-Einheit 21 gepresst wird. Der Elektromotor 31 wird dabei über den Frequenzumformer 32 gespeist und gesteuert und zwar mit einer von der Belastung der Aufzugskabine abhängigen Frequenz. Ein Messwandler 33 ist mit der Anschlussleitung 34 an der Verbindungsleitung 25, welche das Steuerventil 26 und den Zylinder 23 miteinander verbinden, angeschlossen. Er nimmt den jeweiligen, entsprechend der in der Aufzugskabine vorhandenen Belastung, im Zylinder 23 herrschenden Druck auf und wandelt diesen über den Verstärker 36 und den Frequenzumformer 32 in eine entsprechende Frequenz um. Die Drehzahl des Antriebsmotors 31 zum Antreiben der Verdrängerpumpe 28 wird dabei so beeinflusst, dass bei grosser Belastung der Aufzugskabine, also bei hohem Druck im Zylinder 23, sich eine niedere Frequenz einstellt und die Verdrängerpumpe 28 mit einer kleinen Drehzahl vom Antriebsmotor 31 angetrieben wird. Das Verdrängungsvolumen der Verdrängerpumpe 28 wird dadurch, bei praktisch konstanter Antriebsleistung, klein, ebenso die Fahrgeschwindigkeit der Aufzugskabine in Aufwärtsrichtung.

Für beide Ausführungsvarianten, gemäss den Fig. 1 oder 2, wird die Fahrgeschwindigkeit der Aufzugskabine in der Abwärtsrichtung durch die Steuer- oder Absenkventile **6** bzw. **26**, welche in die Arbeitsstellung **B** gebracht sind, derart geregelt, dass die Senkgeschwindigkeit bei höherer Belastung erhöht wird.

Es ist absolut möglich, für beide Ausführungsvarianten gemäss Fig. 1 oder 2, anstelle einer stufenlosen Anpassung der Fahrgeschwindigkeiten in der Aufwärtsrichtung an die jeweilige Belastung der Aufzugskabine, auch Zwischenlösungen vorzusehen, bei welchen für die Variante nach Fig. 1, beispielsweise eine Verstellpumpe mit zwei oder mehr definierten Leistungskoordinaten, oder für die Variante nach Fig. 2 beispielsweise eine Verdrängerpumpe mit frequenzgeregeltem Antriebsmotor mit festen Drehzahlabstufungen für unterschiedliche Belastungen eingesetzt wird.

**Patentansprüche**

1.    Verfahren zum Einsparen von elektrischer Energie für den Antrieb eines hydraulischen Aufzuges, bei welchem ein Druckmittel unter Verwendung einer von einem Elektromotor (11, 31) angetriebenen Hydraulikpumpe (8, 28) aus einem Behälter (9, 29) durch eine Hauptleitung (7, 27) in einen Zylinder (3, 23) gepumpt wird, um den Aufzug aufwärts zu bewegen, und bei welchem das Druckmittel vom Zylinder (3, 23) über ein Steuer- oder Absenkventil (6, 26) in den Behälter (9, 29) zurückfliesst, um den Aufzug abwärts zu bewegen,
wobei die Leistung des Antriebsaggregates bei jeder Belastung der Aufzugskabine durch jeweiliges Anpassen der Fahrgeschwindigkeit in der Aufwärtsrichtung konstant bleibt indem die Fahrgeschwindigkeit für die Aufwärtsfahrt abhängig vom auf das Druckmedium ausgeübten Druck eingestellt wird, welcher durch die Belastung der Aufzugskabine beeinflusst wird.

2.    Verfahren nach Anspruch 1,
dadurch gekennzeichnet,
dass die Fahrgeschwindigkeit für die Aufwärtsfahrt durch den infolge der Belastung der Aufzugskabine auf das Druckmedium ausgeübten Druck eingestellt wird auf die der maximalen Motorleistung entsprechende Volumengeschwindigkeit des Druckmediums.

3.    Verfahren nach Anspruch 1,
dadurch gekennzeichnet,

dass die Fahrgeschwindigkeit für die Aufwärtsfahrt durch den infolge der Belastung der Aufzugskabine auf das Druckmedium ausgeübten Druck eingestellt wird auf die der maximalen Motorleistung entsprechende Drehzahl des Elektromotors (11,31).

4.    Vorrichtung zur Durchführung des Verfahrens gemäss Anspruch 1 und 2, zum Einsparen von elektrischer Energie für den Antrieb eines hydraulischen Antriebes mit einer an einen Elektromotor (**11**, **31**) angeschlossenen Hydraulikpumpe (**8**, **28**), einem Behälter (**9**, **29**) und einer vom Behälter (**9**, **29**) zur Hydraulikpumpe (**8**, **28**) und weiter über ein Steuer- oder Absenkventil (**6**, **26**) zu einem Zylinder (**3**, **23**) einer Kolben-Zylinder-Einheit (**1**, **21**) führenden Leitung (**7**, **5**, **27**, **25**),
**dadurch gekennzeichnet**,
dass die Hydraulikpumpe eine Verstellpumpe (**8**) mit veränderlichem Verdrängungsvolumen ist, und dass zwischen einer Hauptleitung (**7**) und der Verstellpumpe (**8**) ein die Verstellpumpe (**8**) regulierendes Druckregelungsventil (**14**) angeordnet ist, welches direkt vom Druck des Druck mittels im die Aufzugskabine bewegenden Zylinder 3 beaufschlagt wird.

5.    Vorrichtung zur Durchführung des Verfahrens gemäss Anspruch 1 und 3,
**dadurch gekennzeichnet**,
dass die Hydraulikpumpe eine Verdrängerpumpe (**28**) mit konstantem Verdrängungsvolumen ist, und dass an der das Steuerventil (**26**) mit dem Zylinder (**23**) verbindenden Leitung (**25**) ein Messwandler (**33**) angeordnet ist, welcher abhängig vom Druck im Zylinder (**23**) über einen Verstärker (**36**) einen den Elektromotor (**31**) speisenden Frequenzumformer (**32**) steuert.

**Claims**

1.    Method for the saving of electrical energy for the drive of a hydraulic lift, in which a pressure medium is pumped out of a container (9, 29) through a main duct (7, 27) into a cylinder (3, 23) with the use of a hydraulic pump (8, 28) driven by an electric motor (11, 31) in order to move the lift upwardly and in which the pressure medium flows from the cylinder (3, 23) by way of a control or lowering valve (6, 26) back into the container (9, 29) in order to move the lift downwardly, wherein the power output of the drive unit remains constant in the upward direction through respective matching of the travel speed for any loading of the lift cage in that the travel speed for the upward travel is set in dependence on the pressure which is exerted on the pressure medium and which is influenced by the loading of the lift cage.

2.  Method according to claim 1, characterised in that the travel speed for the upward travel is set by the pressure, which is exerted on the pressure medium due to the loading of the lift cage, to the volume speed, which corresponds to the maximum motor output, of the pressure medium.

3.  Method according to claim 1, characterised in that the travel speed for the upward travel is set by the pressure, which is exerted on the pressure medium due to the loading of the lift cage, to the rotational speed, which corresponds to the maximum motor output, of the electric motor (11, 31).

4.  Device for the performance of the method according to claims 1 and 2, for the saving of electric energy for the drive of a hydraulic lift with a hydraulic pump (8, 28) connected to an electric motor (11, 31), a container (9, 29) and a duct (7, 5 27, 25) leading from the container (9, 29) to the hydraulic pump (8, 28) and further by way of a control or lowering valve (6, 26) to a cylinder (3, 23) of a piston-cylinder unit (1, 21), characterised in that the hydraulic pump is an adjustable pump (8) of variable displacement volume and that a pressure-regulating valve (6), which regulates the adjustable pump (8), is arranged between a main duct (7) and the adjustable pump (8), which is loaded directly by the pressure of the pressure medium in the cylinder (3) loading the lift cage.

5.  Device for the performance of the method according to claims 1 and 3, characterised in that the hydraulic pump is a positive-displacement pump (28) of constant displacement volume and that a measuring transducer (33) by way of an amplifier (36) in dependence on the pressure in the cylinder (23), is arranged at the duct (25) connecting the control valve (26) with the cylinder (23).

**Revendications**

1.  Procédé pour économiser de l'énergie électrique pour l'entraînement d'un ascenseur hydraulique, selon lequel un agent de pression, à partir d'un récipient (9, 29), est amené par pompage dans un cylindre (3, 23) par une conduite principale (7, 27), à l'aide d'une pompe hydraulique (8, 28) entraînée par un moteur électrique (11, 31), pour faire monter l'ascenseur, et selon lequel l'agent de pression, à partir du cylindre (3, 23), revient dans le récipient (9, 29) par l'intermédiaire d'une soupape de commande ou de descente (6, 26) pour faire descendre l'ascenseur, la puissance de l'agrégat d'entraînement restant constante quelle que soit la sollicitation de la cabine d'ascenseur grâce à une adaptation de la vitesse dans le sens ascendant, grâce au fait que la vitesse pour la montée est réglée en fonction de la pression exercée sur l'agent de pression, laquelle pression est influencée par la sollicitation de la cabine d'ascenseur.

2.  Procédé selon la revendication 1, caractérisé en ce que la vitesse pour la montée est réglée, grâce à la pression exercée sur l'agent de pression à la suite de la sollicitation de la cabine d'ascenseur, à la vitesse volumique de l'agent de pression qui correspond à la puissance maximale du moteur.

3.  Procédé selon la revendication 1, caractérisé en ce que la vitesse pour la montée est réglée, grâce à la pression exercée sur l'agent de pression à la suite de la sollicitation de la cabine d'ascenseur, à la vitesse du moteur électrique (11, 31) correspondant à la puissance maximale du moteur.

4.  Dispositif pour la mise en oeuvre du procédé selon les revendications 1 et 2, pour économiser de l'énergie électrique pour l'entraînement d'un ascenseur hydraulique, comprenant une pompe hydraulique (8, 28) raccordée à un moteur électrique (11, 31), un récipient (9, 29) et une conduite (7, 5, 27, 25) qui va du récipient (9, 29) à la pompe hydraulique (8, 28) et à un cylindre (3, 23) d'une unité piston-cylindre (1, 21), en passant par une soupape de commande ou de descente (6, 26), caractérisé en ce que la pompe hydraulique est une pompe à cylindrée variable (8) à volume de refoulement variable, et en ce qu'il est prévu, entre une conduite principale (7) et la pompe (8), une soupape régulatrice de pression (14) régulant la pompe (8), qui est sollicitée directement par la pression de l'agent de pression dans le cylindre (3) déplaçant la cabine d'ascenseur.

5.  Dispositif pour la mise en oeuvre du procédé des revendications 1 et 3, caractérisé en ce que la pompe hydraulique est une pompe volumétrique (28) à volume de refoulement constant, et en ce qu'il est prévu, au niveau de la conduite (25) reliant la soupape de commande (26) au cylindre (23), un transducteur (33) qui commande, en fonction de la pression dans le cylindre (23), un convertisseur de fréquence (32) alimentant le moteur électrique (31), par l'intermédiaire d'un amplificateur (36).

# Fig. 1

# Fig. 2